(19) Europäisches Patentamt
European Patent Office
Office européen des brevets

(11) EP 0 913 780 A2

(12) EUROPEAN PATENT APPLICATION

(43) Date of publication:
06.05.1999 Bulletin 1999/18

(51) Int. Cl.$^6$: G06F 17/30

(21) Application number: 98120593.3

(22) Date of filing: 30.10.1998

(84) Designated Contracting States:
AT BE CH CY DE DK ES FI FR GB GR IE IT LI LU MC NL PT SE
Designated Extension States:
AL LT LV MK RO SI

(30) Priority: 31.10.1997 US 962470

(71) Applicant: Hitachi, Ltd.
Chiyoda-ku, Tokyo 101-8010 (JP)
Designated Contracting States:
DE GB

(72) Inventors:
- Singh, Vineet
  Cupertino, CA 95014 (US)
- Ranka, Sanjay
  Gainesville, FL 32606 (US)
- Alsabti, Khaled
  Riyadh 11632 (SA)

(74) Representative:
Strehl Schübel-Hopf & Partner
Maximilianstrasse 54
80538 München (DE)

# (54) Method and apparatus for data clustering

(57) In order to reduce the total number of distance calculations required for clustering, a multidimensional search tree is formed so that each node other than the root node corresponds to a subspace of a space to which pattern vectors to be clustered belong (101(Fig. 2)). The nodes of the tree is traversed sequentially to execute the following processing for each node (200(Fig. 2)). It is judged, for each prototype of a candidate set of prototypes, whether the prototype is unlikely to be nearest the pattern vector belonging to the subspace (306(Fig. 4)). A prototype unlikely to be nearest, if found, is eliminated from the candidate set, so that the prototypes remaining in the candidate set is used later on, when a nearest prototype to each of the pattern vectors within the subspace is to be found (307(Fig. 4)).

FIG. 2

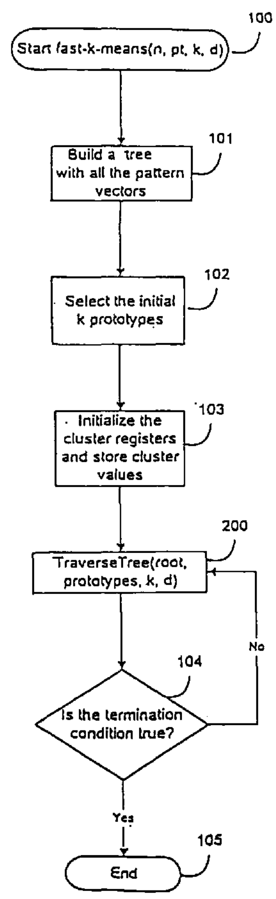


EP 0 913 780 A2

## Description

BACKGROUND OF THE INVENTION

The present invention relates generally to a method and apparatus for clustering similar data objects included in a dataset into groups, and in particular to a method and apparatus suitable to reducing the computational requirements when performing *k*-means clustering of similar objects into groups.

In recent years, the progress of information automation has increased the computer databases of modern businesses to the point where a blizzard of numbers, facts and statistics are collected and stored, but less information of any significance is extracted from the massive amounts of data. The problem is that conventional computer databases are powerful in the manner in which they house data, but unimaginative in the manner of searching through the data to extract useful information. Simply stated, the use of computers in business and scientific applications has generated data at a rate that has far outstripped the ability to process and analyze it effectively.

To address this problem, a practice known as data "mining" is being developed to identify and extract important information through patterns or relationships contained in available databases. Humans naturally and quickly "mine" important concepts when interpreting data. A person can scan a magazine's table of contents and easily select the articles related to the subject of interest. A person's ability to extract and identify relationships goes beyond the simple recognizing and naming of data objects, it includes the ability to make judgments based on overall context or subtle correlations among diverse elements of the available data. Computers on the other hand, cannot efficiently and accurately undertake the intuitive and judgmental interpretation of data. Computers can, however, undertake the quantitative aspects of data mining because they can quickly and accurately perform certain tasks that demand too much time or concentration from humans. Computers, using data mining programs and techniques are ideally suited to the time-consuming and tedious task of breaking down vast amounts of data to expose categories and relationships within the data. These relationships can then be intuitively analyzed by human experts.

Data mining techniques are being used to sift through immense collection of data such as marketing, customer sales, production, financial and experimental data, to "see" meaningful patterns or groupings and identify what is worth noting and what is not. For example, the use of bar-code scanners at supermarket checkouts typically results in millions of electronic records which, when mined, can show purchasing relationships among the various items shoppers buy. Analysis of large amount of supermarket *basket data* (the items purchased by an individual shopper) can show how often groups of items are purchased together, such as, for example, fruit juice, children's cereals and cookies. The results can be useful for decisions concerning inventory levels, product promotions, pricing, store layout or other factors which might be adjusted to changing business conditions. Similarly, credit card companies, telephone companies and insurers can mine their enormous collections of data for subtle patterns within thousands of customer transactions to identify risky customers or even fraudulent transactions as they are occurring. Data mining can also be used to analyze the voluminous number of alarms that occur in telecommunications and networking alarm data.

The size of the data set is essential in data mining: the larger the database, the more reliable the relationships which are uncovered. Large databases, unfortunately, have more records to sift through and require more time to pass through the records to uncover any groupings or pattern regularities. The number of items for which the relationships are sought is also important to the efficiency of data mining operations: the larger the number of items, the more time to pass through the records that are required to extract reliable information.

A fundamental problem encountered in extracting useful information from large data sets is the need to detect natural groupings that can be targeted for further study. This problem is frequently encountered when data mining is applied to image processing or pattern recognition. For example, pattern recognition in the social sciences, such as classifying people with regard to their behavior and preferences, requires the grouping of data that may not be uniformly occupied in the dataset being analyzed. This is also true in image recognition, which attempts to group and segment pixels with similar characteristics (such as text or graphics) into distinct regions.

In data mining, the act of finding groups in plural data objects included in a dataset is known as clustering. Data clustering identifies within the dataset the dense spaces in a non-uniform distribution of data objects. The partitioning of given set of data objects is done such that data objects in the same cluster share similar characteristics and data objects belonging to different clusters are distinct.

A data object has plural attributes or measurement items, therefore each data object is represented by and is processed as a vector (also referred to as "patterns vectors") which as those attributes or measurement items as its components. Therefore, each data object or its corresponding pattern vector is represented by a particular point located in a space with the dimension of the pattern vector.

Because clustering results vary with the application requirements, several different approaches exist in the prior art. These can be broadly classified as follows:

Partitioning operations: These operations partition a dataset into a set of *k* clusters, where *k* is an input parameter for the operation.

In this kind of clustering method, the following processing are executed.

(a) A plurality of prototypes respectively representing a plurality (k) of clusters are predetermined. They are located in a space to which a plurality of pattern vectors belong. Each pattern vector has a plurality of dimensions and represents one of a plurality of data objects. For each pattern vector, one of the prototypes nearest to each pattern vector is judged.
(b) Each pattern vector is assigned to one of the clusters represented by a nearest prototype as judged for each pattern vector.
(c) A plurality (k) of new prototypes are determined which respectively represent the clusters, based upon pattern vectors assigned to respective clusters.
(d) The steps a to c are repeated, using the new prototypes, until a predetermined termination condition is met.

A prototype representing a clustery can be determined by various ways. For example, a gravity center (centroid) of the cluster can be used as a prototype of the cluster. This method is known as a *k*-means method, where *k* generally represents a total number of clusters. Or one of the data objects of the cluster located near its gravity center can be used instead. This method is known as a *k*-medoid method, where *K* still represents a total number of clusters. As mentioned above, the *k* prototypes are iteratively modified, and at each iteration, the cluster assignment of the pattern vectors are changed to their closest prototypes. The termination condition may be that a given objective function predetermined for evaluation isles than a predetermined threshold. The function may be an error function which calculates a square sum of the distance between each pattern vector and one of the prototypes representing the cluster to which the pattern vector belongs. The termination condition may be that the newly determined prototypes do not change after additional repetition.

Density-based operations: These operations use information about the proximity of points for performing the clustering. The formulations are based on the assumption that all data objects which are spatially proximate belong to the same cluster. This definition is typically extended for transitivity (i.e., if A is proximate to B and B is proximate to C then A and C are also proximate).

Hierarchical operations: These hierarchical operations create a hierarchical decomposition of the entire data set. The hierarchical decomposition is typically represented by a tree. The tree can be built bottom-up (*agglomerative* approach) by combining a set of patterns into larger sets, or top-down (*division* approach) by iteratively decomposing a set of patterns into smaller subsets.

Clustering operations are compared based on the quality of the clustering achieved and the time requirements for the computation. Depending on the application requirements, one or more of the above features of the clustering operation may be relevant.

It has been shown that *k*-means method is effective in producing good clustering results for many practical applications. However, a direct implementation of the *k*-means method requires computational time proportional to the product of total number of data objects and the total number of clusters per iteration. For large databases, the repetitive iterations needed to yield good clustering results can be time consuming and computationally intensive.

What is needed, then, is an improved method and apparatus for implementing *k*-means data clustering, which produces the same or comparable (due to the round-off errors) clustering results to the *k*-means data clustering method as is currently practiced, while reducing the computational requirements.

Accordingly, it is an object of the present invention to provide a data clustering method and apparatus for initially organizing the data objects so that all objects which are actually closest to one of preselected sample prototypes each representing one of the clusters e are identified more quickly and more efficiently.

It is another object of the present invention to provide a data clustering method and apparatus which is suitable to reduce the number of distance calculations and overall time of computation without affecting the overall accuracy of performing *k*-means data clustering over a given dataset, as compared with the prior art methods.

It is still another object of the present invention to accomplish the above-stated objects by utilizing a data clustering method and apparatus which is simple in design and use, and efficient to perform with regard to data clustering computations.

The foregoing objects and advantages of the invention are illustrative of those which can be achieved by the present invention and are not intended to be exhaustive or limiting of the possible advantages which can be realized. Thus, these and other objects and advantages of the invention will be apparent from the description herein or tan be leaned from practicing the invention, both as embodied herein or as modified in view of any variation which may be apparent to those skilled in the art. Accordingly, the present invention resides in the novel methods, arrangements, combinations and improvements herein shown and described.

SUMMARY OF THE INVENTION

In accordance with these and other objects of the invention, a brief summary of the present invention is presented. Some simplifications and omissions may be made in the following summary, which is intended to highlight and introduce some aspects of the present invention, but not to limit its scope. Detailed descriptions of a preferred exemplary embodiment adequate to allow those of ordinary skill in the art to make and use the inventive concepts will follow in later sections.

In order to accomplish the above-mentioned objects, it is judged for each of at least plural ones within the total pattern vectors, whether there is at least one prototype which is unlikely to be nearest to the pattern vector, within the prototypes. This judgement is executed before a nearest prototype is selected for each pattern vector from all of the prototypes. If such a prototype which is unlikely to be nearest is found with a pattern vector, that prototype is eliminated from the total of the prototypes, when an operation to find a prototype nearest that pattern vector is executed.

The present invention is based upon the finding that the judgement whether there is a prototype which is unlikely to be nearest to a pattern vector can be executed without executing and with less amount of, calculation than calculation of distances from that pattern vector to all prototypes. If it can be judged with a pattern vector that there is at least one prototype which has longer distance to that pattern vector than another prototype, then that one prototype is unlikely to be nearest to that pattern. So, it is expected that the judgement whether there is a prototype which is unlikely to he nearest to a pattern vector requires can be executed with less amount of calculation than that of calculation of those distances.

To be more specific, the following processing is executed.

(a) For each of the pattern vectors, one of a plurality (k) of prototypes nearest to each pattern vector is judged. Each pattern vector represents one of a plurality of data items included in a dataset and has a plurality of dimensions. The prototypes respectively represent a plurality (k) of clusters and are located in a space which has said plurality of dimensions.

(b) Each pattern vector is assigned to one of the clusters represented by a nearest prototype as judged for each pattern vector.

(c) For each of at least plural ones within the pattern vectors, it is judged whether there is at least one prototype which is unlikely to be nearest to each pattern vector, within the prototypes.

(d) The prototypes used in step a is limited, depending upon a pattern vector to be processed in step a, so that the prototypes other than at least one prototype is used in step a for one of the pattern vectors, in case that at least one prototype has been judged as a prototype which is unlikely to be nearest to that one pattern vector.

In a preferred embodiment of the present invention, the above mentioned judgement of a prototype which is unlikely to be nearest to a pattern vector is executed with respect to each of the subspaces of the data space to which the pattern vectors belong, that is, by using the same calculation with all pattern vectors located in the same subspace. That is, the following processing is further executed.

(e) The space is divided into a plurality of subspaces before execution of the step a.

Step c is executed so as to judge, with each of at least plural ones within the subspaces, whether there is at least one prototype which is unlikely to be nearest to any of plural pattern vectors located in each subspace.

Step d is executed so as to limit the prototypes used in step a, depending upon a subspace to be processed in step a, so that the prototypes other than at least one prototype is used in step a for any of plural pattern vectors located in a subspace, in case that at least one prototype has been judged as a prototype unlikely to be nearest to any of plural pattern vectors located in that subspace.

In more specific, a method and apparatus are disclosed for determining the pattern vectors which are closest togiven prototypes, after pruning prototypes through geometrical constraints, before a $k$-means process is applied to the prototypes. For that purpose, a multidimensional search tree is constructed. This tree divides the space to which the pattern vectors belong into plural subspaces arranged in hierarchy. A node other than the root node corresponds to one of the subspaces. For each branch in the search tree, a candidate set of prototypes is formed from the parent of a child node. The minimum and maximum distances among the distances from all points in a subspace corresponding to the child node to one of the prototypes in the candidate set is determined. Those minimum and maximum distances are calculated to each of the prototypes. The minimum value of the maximum distances respectively found for those prototypes is compared to the minimum distance found for each prototype in the candidate set. In case the minimum distance found for one of the prototypes is greater than the minimum value of the maximum distances found for those prototypes, the one prototype is unlikely to be a nearest prototype, with respect to any of the pattern vectors located in a subspace corresponding to the child node. So, the one prototype is pruned or eliminated from the candidate set of the prototypes for the child node. The above processing is executed to different nodes. Pruning the number of remote prototypes with respect to a child node reduces the number of distance calculations required when the $k$-means process is executed to find a prototype nearest to each of the pattern vectors located in the subspace corresponding to the child node, thereby significantly reducing the overall computation time.

## BRIEF DESCRIPTION OF THE DRAWINGS

Figure 1 is a block Form diagram of an implementation of the data clustering system of the present invention on a general purpose computer.

Figure 2 is a flowchart illustrating the overall operation of the data clustering system according to one embodiment of the present invention.

Figure 3 is a flowchart illustrating a traverse tree operation of the data clustering system according to one embodiment of the present invention.

Figure 4 is a flowchart illustrating a pruning operation of the data clustering system according to one embodiment of the present invention.

Figure 5 is a graphical representation of the pruning method and apparatus as applied to a child node according to one embodiment of the present invention.

## DETAILED DESCRIPTION OF THE PREFERRED EMBODIMENTS OF THE INVENTION

The present invention provides a data clustering method and apparatus for analyzing database records to uncover relationships between various items contained within the records, and in particular to a method and apparatus suitable to reduce the computational requirements when performing *k*-means clustering of similar objects into groups.

Referring now to the drawings, in which like numerals refer to like components or steps, there is disclosed in Figure 1 broad aspects of the apparatus of a preferred embodiment of the present invention. Figure 1 discloses a general arrangement of a data clustering system.

In a preferred embodiment of the present invention, the data clustering system 1 works in conjunction with a general purpose computer or similar processor based electronic device for processing large buffers of data by quickly executing repetitive operations. However, it should be understood that the references to specific components typically found in general purpose computers, related to but not forming part of the invention, are provided for illustrative purposes only. References to such computer components are provided for ease in understanding how the present invention may be practiced in conjunction with known types of data processing applications. Moreover, the various components of the data clustering system 1 contemplated by the present invention may be implemented by direct electrical connection through customized integrated circuits, or a combination of circuitry and programming, using any of the methods known in the industry for providing the functions described herein without departing from the teachings of the invention. Those skilled in the art will appreciate that from the disclosure of the invention provided herein, commercial semiconductor integrated circuit technology would suggest numerous alternatives for actual implementation of the functions of the data clustering system 1 that would still be within the scope of the present invention.

According to one embodiment of the present invention, the data clustering system 1 contains, in pertinent part, a processor 2 (preferably a microprocessor), an address generation unit 3, and an interface unit 4. The data clustering system 1 also contains data storage memory arrays 5 which may be composed of storage locations in random access memory (RAM) 5a and read only memory (ROM) 5b, and preferably a combination of both. The processor 2, address generation unit 3, interface unit 4 and the memory arrays 5 are all interconnected via a suitable communication bus 8 as is practiced in the industry. The memory arrays 5 have address inputs and data inputs and outputs for storing and retrieving data from different storage locations within the arrays 5. The address generation unit 3 has address outputs coupled to the address inputs of the memory array 5 and to address inputs of the interface unit 4. The interface unit 4 also has address outputs connected to address inputs of external mass storage units 6.

The processor 2 provides decision making and control operations. A data clustering program to be executed by the processor 2 is stored in the ROM 5b or in the external mass storage units 6. The processor 2 further includes a plurality of registers 7, composed of both general purpose storage registers and specific purpose registers such as accumulators, counters and pointers. The program is executed by using data stored in RAM 5a, ROM 5b and registers 7. The program can be recorded in a storage medium like a magnetic disk and can be put on sale. As practiced in the industry, the processor 2 communicates through the interface unit 4 to external mass storage units 6 such as disk drive units. Similar to the memory 5, the disk drive units 6 include data inputs, data outputs, and address inputs so that data can be read from or written to the disk drive units 6. It is anticipated that the database will be maintained on the disk drive units 6, with portions of the database being copied into the memory arrays 5 so that the processor 2 can manipulate the data. In a preferred embodiment of the present invention, the clock speed of the processor 2 is 66 MHz and the RAM 5a of the memory array 5 is l28 MByte.

In general, the aim of the present invention is to have the processor 2 of the data clustering system 1 partition a dataset of *n* objects or pattern vectors having (*d*)attributes or measurements into *k* clusters. Therefore, it is presumed that the dimension of pattern vectors is *d* in the present embodiment. That is, the data processing system 1 will perform recursive iterations over the data set to classify the data into *k* groups such that each group contains at least one pattern vector, with every pattern vector belonging to one cluster. In the present embodiment, the processor 2 strives to group the data into clusters for which certain characteristics or graphics look best, or to retain the clustering that appears to give rise to the most meaningful interpretation. Here, the more related or close the pattern vectors are, the smaller the "distance"between the pattern vectors. Conversely, the more dissimilar the characteristics between the pattern vectors, the greater the distance value between them. Thus, pattern vectors of the same cluster will, in most cases, have a smaller measurement for distance than pattern vectors in two distinct clusters.

As practiced in the industry, the processor 2 performs clustering so as to minimize the average dissimilarity (average distance) of a pattern vector to all other pattern vectors of the same cluster. In the present invention, *k*-means clustering is practiced in which pattern vectors i are defined by measurement values and the cluster is represented by its centroid. $C^j_{LS}$ is defined as the linear sum of the pattern vectors in the $j^{th}$ cluster $Cj$. The centroid is defined as the linear sum $C^j_{LS}$ divided by the number of pattern vectors in the cluster.

Referring now to Figure 2, the operation of one embodiment of the present invention will now be described. In step 100, the processor 2 begins the preparation for performing a *k*-means clustering operation, including resetting memory arrays 5 and registers 7.

In step 101, a multidimensional search tree, as known to those in the industry, is constructed to organize the pattern vectors (represented as "*pt*" in Figures 2 to 4) of dimensions *d* into *k* non-empty subsets. It is to be noted that in some applications of data clustering, it can happen that part of the attributes or measurement items of each pattern vector are used in clustering those pattern vectors, and other attributes or measurement items of each pattern vector are neglected. In such a case, the dimension of those part of the attributes or measurement items considered in clustering may be regarded as the dimension *d* of the pattern vectors throughout the present specification including the claims.

In the present invention, various search trees can be used as the search tree. In the present embodiment, a tree called as *k-d* tree is used, where *k-d* is abbreviation of k-dimensional and *k* refers to the dimension of the pattern vectors generally. It is to be noted that in the present embodiment *d* is used so as to refer to the dimension of the pattern vectors and *k* is used so as to refer to the number of the clusters. A *k-d* tree is a multidimensional binary search tree. Control splitting points are set at appropriate dimensions of the tree, and each pattern vector is classified into one of the left and right child nodes, depending upon which one of the coordinate of the pattern vector along the splitting dimension and the corresponding coordinate of the control splitting point is larger. There may be *k-d* trees of various types, but the present invention is not limited to a *k-d* tree of a specific type. In the description below, a *k-d* tree is simply referred to as a search tree or a tree, unless otherwise mentioned. The data on the constructed tree is stored in the RAM 5a of memory arrays 5.

In the present invention, the search tree is built by splitting the dimension with the longest length of an interval across all nodes at the same level of the tree, at a central point of the dimension (referred to as a control splitting point) into two equal parts (as measured by width). That is, the space to which the pattern vector belong is divided into two subspaces by a plane which passes through a central point of the coordinate axis of the dimension with the longest length of an interval and which is perpendicular to the axis. Use of this kind of splitting point is referred to as a central splitting approach. The points on the plane belongs to either one of the two subspaces determined by a predetermined standard. Among the nodes of the tree, a node located at the root of the tree is referred to a root node, when that node is referred to apart from other nodes. As a result, the root node will be singular, while the next level below the root node will contain two nodes. These two nodes will be divided at the next level into a total of four nodes, and so on.

It should be understood that although these approaches are used in the preferred embodiment for performance based reasons, the present invention is not so limited. For example, a common dimension across all nodes at the same level of the tree could be chosen as a splitting dimension at respective nodes, instead of the longest length splitting dimension. Similarly, a median splitting point could be used instead of the preferred central splitting approach mentioned above, without departing from the scope of the present invention. A median point is one of the pattern vectors located nearest to a central point used as the splitting point in the previously mentioned description of construction of the search tree. Use of this median point as a splitting point requires additional calculation to determine the median point, after the central point has been determined.

In the present invention, the depth of the search tree is referred to as *D*. The root node of the search tree corresponds to the space of the dimension *d* of the pattern vectors, and represents all of the pattern vectors, while the children nodes of the root respectively corresponds to subspaces of the space and represent subsets of the pattern vectors completely contained in subspaces. A subspace corresponding to an upper node includes a subspace corresponding to a lower node of the upper node. When a head point of a pattern vector is located in one of the subspaces, the pattern vector is hereinafter referred to as one located in the subspace. A distance between a pattern vector and other point refers to the distance between the head point of the pattern vector and that other point. The lowest one of the subspaces includes at least one pattern vector, and each pattern vector is included both in a lowest subspace which includes that pattern vector and in other upper subspace or subspaces. A pattern vector are not include at the same time in two subspaces which are not in inclusive relation.

A node may be graphically represented as "a box" whose side is a portion separated by the maximum and minimum values along each dimension, of the pattern vectors represented by the node. Hereinafter, a node may be referred to so as to refer to a box representing the node. As can be understood, the box that represents the root node will be the largest, while the nodes at the lower level will be represented by smaller boxes.

After this initial partitioning of the pattern vectors in the search tree formation, a number (*k*) of points equal to the number (*k*) of the clusters to be generated and located in the multidimensional space are randomly generated by processor 2 or *k* pattern vectors are derived from the pattern vectors included in the dataset under processing, by processor 2, both as initial points respectively representing the clusters (step 102). These *k* points are called prototypes and are used as seeds for generating their corresponding clusters. These prototypes are associated with the search tree as a whole.

One of the prototypes nearest to each pattern vector is judged according to a method mentioned later on, and each pattern vector is assigned to its nearest prototype, that is, to one of the clusters represented by the nearest prototype. In future iterations of the method disclosed in the present embodiment, each prototype is redefined so as to be the centroid of the pattern vectors that have been assigned to the cluster which the prototype represents, after the assignment of the pattern vectors to the clusters. A centroid of the pattern vectors of a cluster is a center of the gravity of those pattern vectors. Assignment of the pattern vectors to the clusters is executed again, based upon the newly defined prototypes. Thus, definition of new prototypes and assignment of the pattern vectors are repeated. Thus, the prototypes are iteratively refined by the method. These initial prototypes are stored in memory arrays 5, and depending on the size of the dataset, in external mass storage units 6 via interface unit 4. After each pattern vector has been assigned to one of the prototype (that is, to one of the clusters), the processor 2 computes, for each prototype (that is, for each cluster), data regarding the total number m of pattern vectors assigned to that cluster, the linear sum of those pattern vectors, ("LS", calculated as $\Sigma^m{}_{i=1}$ Pi), and the square sum of those pattern vectors ("SS", calculated as $\Sigma^m{}_{i=1}$ $Pi^2$). These values calculated for each cluster are stored in plural registers (which may me referred to as a cluster register) selected in corresponding to that cluster from the register group 7 after the registers have been reset and initialized (step 103).

Next, a number of iterations are performed over the search tree, referred to herein as a "traverse tree" operation (step 200), starting from the root node. When the traverse tree operation is to be started, the node to which the operation is to be applied, a candidate set used in the operation, the number of the clusters *k*, the dimension of the pattern vectors d. The candidate set used when the operation is first applied to the root node comprises the initial prototypes. The traverse tree operation is disclosed in more detail in Figure 3. Tuning now to Figure 3, for each iteration of a preferred embodiment of the present invention, the search tree is traversed using a depth first strategy. When the traverse tree operation (200) is started, a pruning operation is applied in connection with the starting node (the root node in the current case) in a manner disclosed below (step 300), where the operation is executed in connection with its two lower nodes connected to the two branches of the root node. The operation is further applied to respective lower nodes (step 204), where the operation is executed in connection with their further lower nodes connected to the two branches of each of those lower nodes. Thus, the pruning operation is sequentially applied to each branch of nodes of the tree. When the pruning operation is executed to a node connected to a branch, one or plural ones of the prototypes can be eliminated, if those prototypes satisfy a predetermined condition for pruning. The new candidate set after pruning of those prototypes is determined as a candidate set for the node for later processing. If no prototype is eliminated by the pruning operation, the original candidate set is determined as a candidate set for the node for later processing.

To be more specific, in step 300, the pruning operation is executed to each of the two branches of the root node. A new candidate set is determined for each of two lower nodes connected to the two branches. The branches and nodes to which the pruning operation of step 204 is to be applied later on is determined by the order of nodes predetermined for application of the traverse tree operation (depth first policy in the present embodiment). When the pruning operation is to be started, the node (the root node in the current case) to which the operation is to be applied, the candidate set determined for the node (the candidate set comprising the initial prototypes in the current case) and the dimension *d* of the pattern vectors are designated.

Referring to Figure 4 for a detailed description of the pruning operation, in step 301, the candidate set of prototypes is compiled for the portion of the subtree that the operation will first branch down. When the pruning operation is applied to the root node and step 301 is executed, the pruning operation is applied to a subtree (this is equal to the entire tree) starting from the root node. So, the candidate set is used first with the root node. The same candidate set is used to different branches of the root node. The candidate set used for those branches consists of the prototypes determined for the first node of the subtree (referred to as the "parent" node, and the root node in the current case) to which the pruning operation is applied. Hereinafter, a candidate set determined for a node or the prototypes included therein may be referred to as a candidate set or prototypes included or found in the node.

When the pruning operation is applied to a parent node of a subtree, the distance calculation which will be explained later on is executed with regard to the prototypes of the candidate set determined for the parent node and the points belonging to the subspace corresponding to a branch node in the level below the parent node (referred to as a "child" node). Based on the result of the distance calculation, certain prototypes in the candidate set are eliminated to form a smaller candidate set in the child node. In the present embodiment, the above-mentioned pruning operation is repeated to different nodes, and the total number of prototypes which become targets of the distance calculation required later on to cluster the pattern vectors into clusters is reduced.

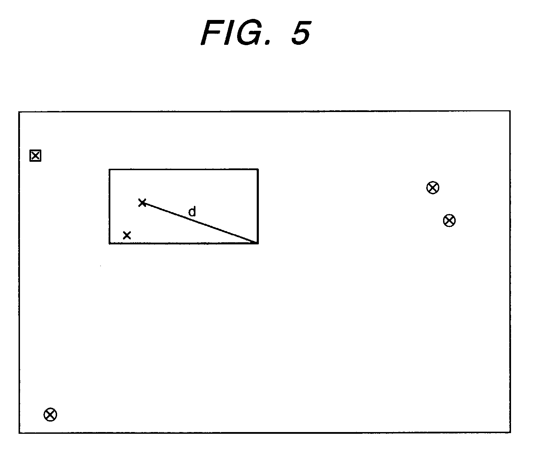

Beginning with the root node, the processor 2 first executes the pruning operation with a child node connected to one of the two branches of the parent node. The processor 2 computes, for each prototype of the candidate set for the parent node, the minimum and maximum distances within distances from the prototype to all points in the subspace representing the child node (step 302). The subspace corresponding to a node, as mentioned earlier, is represented as a box. Reference to Figure 5, in combination with Figure 4, will be helpful at this point. Figure 5 is a graphical representation of the dataset in which *X* represents different prototypes of the candidate set, the inner box is a child node of the parent node (outer box), and *d* is the distance from a prototype to one corner of the box. The distance *d* shown in Figure 5 is between a prototype within a box and a corner of the box, but it can easily be understood from Figure 5 that the maximum distances from a prototype *X* to the box will be to one of the corners of the box, irrespective of whether the prototype is within the box or not. This distance is computed in a preferred embodiment of the present invention as follows:

The designation $furthest_i$ is used to represent the corner of the box corresponding to the node from prototype i ($p_i$). The coordinates of $furthest_i$ ($furthest_{i1}$, $furthest_{i2}$,....$furthest_{id}$) are computed as follows:

$$furthest_{ij} = \begin{cases} B^l_j & : \; |B^l_j - p_{ij}| > |B^u_j - p_{ij}| \\ B^u_j & : \; Otherwise \end{cases} \qquad (1)$$

where $B^l_j$ and $B^u_j$ are the coordinates of the lower and upper boxes of the box along dimension *j*.

The distance between $furthest_i$ and $p_i$ is computed as follows:

$$\text{distance} = \sqrt{\Sigma^d_{j=1} (p_{ij} - furthest_{ij})^2} \qquad (2)$$

Similarly, $nearest_i$ represents the shortest distance among distances from all points in a box to a prototype $p_i$. In an embodiment of the present invention, the coordinates of $nearest_i$ ($nearest_{i1}$, $nearest_{i2}$, ...$nearest_{id}$) are computed as follows:

$$nearest_{ij} = \begin{cases} p_{ij} & : \; p_{ij} \in [B^l_j, B^u_j] \\ B^l_j & : \; p_{ij} < B^l_j \\ B^u_j & : \; p_{ij} > B^u_j \end{cases} \qquad (3)$$

Advantageously, the coordinates of the box of the child node is exactly the same as its parent except for one dimension *q* which has been used for splitting at the parent node. This information is exploited in one embodiment of the present invention to reduce computation time. The present embodiment uses the maximum and minimum distances of the prototype to the parent node; $max_{parent}$ and $min_{parent}$ to refer to these distances. The square maximum distance of prototype $p_i$ with its parent is computed as:

$$max^2_{parent} = \sum_{j=1}^{d} (p_{ij} - furthest_{ij})^2 \qquad (4)$$

The square maximum distance to the child node is computed as:

$$max^2_{child} = (max(|p_{iq}-b^l_q|,|p_{iq}-b^u_q|))^2 + \sum_{j=1 \text{ and } j \neq q}^{d} (p_{ij} - furthest_{ij})^2 \quad (5)$$

where $q$ is the dimension used for splitting at the parent node and $b^l_q$ and $b^u_q$ are the coordinates of the lower and upper corners of the child box along dimension $q$. This is used to express the maximum square distance for the child node in terms of its parent as follows:

$$max^2_{child} = max^2_{parent} - max(|p_{iq}-B^l_q|,|p_{iq}-B^u_q|)^2 + (max(|p_{iq}-b^l_q|,|p_{iq}-b^u_q|))^2 \quad (6)$$

The value of $min^2_{child}$ is similarly obtained:

$$min^2_{child} = min^2_{parent} - (|p_{iq}\text{-}nearest.parent_{iq}|)^2 + (|p_{iq}\text{-}nearest.child_{iq}|)^2 \quad (7)$$

where

$$nearest.parent_{iq} = \begin{cases} \{p_{iq} : p_{iq} \in [B^l_q, B^u_q] \\ \{B^l_q : p_{iq} < B^l_q \\ \{B^u_q : p_{iq} > B^u_j \end{cases} \quad (8)$$

and

$$nearest.child_{iq} = \begin{cases} \{p_{iq} : p_{iq} \in [b^l_q, b^u_q] \\ \{b^l_q : p_{iq} < b^l_q \\ \{b^u_q : p_{iq} > b^u_j \end{cases} \quad (9)$$

For each prototype in the candidate set then, the minimum and maximum distances are computed among the distances from all points in the box to that prototype in the candidate set. Of the maximum distances respectively found for the prototypes, the smallest one is identified as "MinMax" and stored in one of the registers 7 (step 303). It should be noted that although use of one of the registers 7 is preferred in the present embodiment for efficiency purposes, the present invention is not so limited in that a designated address in memory array 5, a designated area of external storage 6, or the like, may be used for this function without departing from the scope of the invention.

For children of the root node, the present embodiment advantageously prunes away some of the prototypes found in the candidate set of the parent node by using the MinMax value in combination with the maximum and minimum distances calculated in the previous step 302. That is, if there is a prototype which is unlikely to be nearest to any pattern vector within a subspace corresponding to one of the children node, that prototype is eliminated from the candidate set with respect to the one child node. To be more specific, in step 304, one of the prototypes in the candidate set of the parent node is selected, and the maximum and minimum distances obtained with the one prototype by processor 2 are compared to the stored MinMax value. If the minimum distance of this prototype to the box representing the child node is greater than the value for MinMax, the prototype is unlikely to be nearest to the subspace corresponding to the child node, because at least one other prototype whose maximum distance to the subspace is the MinMax is nearer to the subspace than the prototype. The prototype is eliminated from the prototypes in the candidate set, and that candidate set after the elimination is used in the subsequent processing as a candidate set for the the child node (step 305).

This approach is applied iteratively until the mimimum distances of all prototypes in the candidate set have been compared to MinMax (steps 305-308). When the process reaches step 309, the pruning operation is completed for that particular branch, and the traverse tree operation (step 200, Figure 3) resumes for a remaining branch of the parent node, if there is any.

The foregoing pruning operation may be understood by its application in the following example:

If a national service company wanted to determine where to place service centers in the US so that its customers (data objects) would have to travel the minimum distance to such centers, a division of the geographic area of the US might yield the 48 state boundary lines. The geographic area of each state would be equivalent to the nodes of the search tree. The location of randomly chosen service centers (equivalent to centroids), for example, could be the city centers of Los Angeles, Sam Francisco, Las Vegas and New York (a candidate set of prototypes). The distance from the locations of each of the residents (data objects) in California (node) to Los Angeles, San Francisco, Las Vegas and New York (prototypes of the candidate set) would then be calculated, with minimum and maximum distances computed. The minimum value of the maximum distances found would then be identified. A centroid in New York would have a minimum distance to a resident in California that would be greater than the smallest of any of the maximum values (MinMax) for distances calculated for any resident in California to Los Angeles, Sam Francisco or Las Vegas. Therefore, the centroid at New York would be pruned from further consideration. On the other hand, a centroid located at, for example, Las Vegas would not have a minimum distance for any resident in the box of California that is not larger than the smallest of the distances to Los Angeles or San Francisco. Therefore, a service center at Las Vegas would not be pruned.

The pruning process of the present embodiment is repeated on along branches until either one prototype remains in the candidate set or a node with no child nodes below it (referred to as "leaf" node) is reached, as will be described in more detail. Through the pruning process, a significant number of prototypes can be eliminated before a direct $k$-means operation is performed to determine the final clustering.

Returning now to Figure 3, after the pruning iterations are completed to a branch in step 300, the process moves to step 202. After pruning the candidate set of the parent node with respect to a child node of the parent node, the candidate set after pruning is used as a candidate set for the child node. In this step, the processor 2 checks if the number of prototypes remaining in the candidate set, after the pruning operation in step 300, is equal to one. If only one prototype remains in the candidate set, it means that the one remaining prototype is the nearest prototype with respect to all the pattern vectors belonging to the subspace corresponding to the child node. So, those pattern vectors are assigned to the one prototype, that is, to the cluster represented by the one prototype, and the statistics (m, LS, SS) of the cluster associated with the prototype are updated for those pattern vectors in that node (step 205). Traversal below this internal node is not pursued since the pattern vectors can only be assigned to the one prototype. The traverse tree operation is continued to another branch of the parent node, if there is any. If there is not such a branch, the traverse tree operation ends with respect to the parent node (step 211).

When the pruning process (step 300) does not result in a candidate set containing only one prototype with respect to a branch for which the pruning operation has been executed, the processor 2 checks whether the child node connected to the branch is a branch node or a leaf node (step 203). If the child node is a branch node, the process returns to the traverse tree process at step 200 for another iteration of the child nodes in the branches of the child node(step 204). The process repeats down every branch of the search tree, as described above. At this point, unless a leaf node containing more than one prototype is involved, the pruning has been completed, and the traverse tree process itself can be terminated (step 211).

When the pruning process (step 300) does not result in a candidate set containing only one prototype (step 202) and the child node is a leaf node(step 203), the process assigns the pattern vectors included in the subspace to the remaining prototypes within the candidate set or to the clusters represented thereby. To be more specific, each of the pattern vectors are subjected to distance calculations to find the nearest prototype (steps 206-207). Each of these pattern vectors is assigned to its nearest prototype (step 208). Every time a new pattern vector is assigned to a prototype or to the cluster represented thereby, the statistics m, LS and SS statistics associated with the cluster to which a pattern vector has been assigned anew need updating (step 209). The process repeats steps 206 through 209 for each pattern vector until they are all assigned to prototypes (step 210). The traverse tree operation is continued to another branch of the parent node, if there is any . If there is not such a branch, the traverse tree operation ends with respect to the parent node (step 211).

Returning to Figure 2, the search tree has now been pruned of certain prototypes, and all pattern vectors of the dataset have been assigned to a prototype or a cluster represented thereby through the traverse tree process (step 200). However, before the process is completed, that is, before the prototypes are determined as ones representing the final clusters, the prototypes are evaluated against preselected threshold values to determine if certain termination conditions are met. These termination conditions are set by the user, and in one preferred embodiment of the present invention, are determined by a distance-error function E for clustering quality, such as:

$$E = \sum_{j=1}^{k} \sum_{r \in c_j} |r - w_j|^2 \qquad (10)$$

where $w_j$ is the centroid of cluster $c_j$ and $r$ is an arbitrary pattern vector assigned to the cluster $c_j$.

The centroid of each cluster is used as an example of a point representing of the cluster. The centroid is used in the embodiment to realize *k* means clustering. The centroid is a center of gravity of the pattern vectors assigned to the cluster by the traverse tree operation. The centroid is calculated by using the data m and LS already calculated to each cluster. Other points representing the cluster can be used in place of the centroid. For example, the representing point an be determined by the K medoid method already referred to.

For high quality clustering, choosing A clusters when *k* is close in value to the number of pattern vectors *n* would yield a low error value since nearly each pattern vector would have its own cluster. This extreme choice of clustering naturally defeats the purpose of clustering, but yields high quality clusters. On the other side of the scale, having a low number of clusters (for example, *k*=2) would likely yield low quality, high error value clusters.

Until the user determined quality of the clustering is achieved (i.e., the termination condition is met), the traverse tree operation 200 is repeated. The new centroids calculated for evaluation of the termination condition as mentioned above are used as the initial prototypes in the candidate set required in the next traverse tree process iterations (step 200). When error values fall below the preset thresholds, (i.e., when no further improvements are made in a given pass of the traverse tree process (step 200)), the termination conditions will be met and the process of data clustering halts.

Other termination condition may be used. For example, the condition may be that the points representing the cluster does not change any more after repetition of the traverse tree. Judgment of the termination condition and repetition of the traverse tree operation is not necessary, in case required clustering operation is just to assign all the pattern vectors to predetermined prototypes. The key to reducing computation time in *k*-means clustering is to minimize the number of distance calculations. The present invention eliminates a significant amount of distance calculations, in sum, (a) by judging, for each of plural pattern vectors, whether there is at least one prototype which is unlikely to be nearest to the pattern vector, and eliminating the prototype from the total of the prototypes, when an operation to find a prototype nearest that pattern vector is executed, (b), to be more specific, by executing the judgment of a prototype unlikely to be nearest, with respect to each of subspaces of a data space to which the pattern vectors belong, and (c), to be further more specific, by (i) finding, each prototype in a candidate set, the minimum and maximum distances within the distances from the prototype to all points in a subspace, (ii) identifying the minimum of the maximum distances (MinMax) each calculated for one of the prototypes, and (iii) pruning or eliminating all prototypes in the candidate set with a minimum distance greater than MinMax, as prototypes unlikely to be nearest.

Moreover, because the calculations of the minimum and maximum distances of each prototype are performed only with the prototype and the subspace and not with each of the pattern vectors themselves included in the subspace, the number of distance calculations are reduced.

Experimented results performed by the inventors to apply the present invention to *k*-means clustering have found that the present invention can improve the prior art *k*-means process by two orders of magnitude in the total number of distance calculations and the overall time of computation.

Although the present invention has been described in detail with particular reference to preferred embodiments thereof, it should be understood that the invention is capable of other and different embodiments, and its details are capable of modifications in various obvious respects. As is readily apparent to those skilled in the art, variations and modifications can be affected while remaining within the spirit and scope of the invention. The disclosed embodiment uses a programmed computer, but the clustering apparatus according to the present invention can be realized by using logic circuits dedicated for clustering, or by combination of a programmed computer and several dedicated logic circuits. Accordingly, the foregoing disclosure, description, and figures are for illustrative purposes only, and do not in any way limit the invention, which is defined only by the claims.

As is clear from the forgoing description, the clustering method and apparatus according to the present invention can execute clustering at a high speed by reducing the total number of required distance calculations.

## Claims

1. A data clustering method for clustering a plurality of data items included in a date set into a plurality of clusters, comprising the steps executed by an apparatus, the steps including:

   (a) judging (207(Fig. 3)), for each of a plurality of pattern vectors, one of a plurality (k) of prototypes nearest to said each pattern vector, each pattern vector representing one of a plurality of data items included in a date set and having a plurality of dimensions, said plurality of prototypes respectively representing a plurality (k) of clusters and being located in a space which has said plurality of dimensions;
   (b) assigning (208(Fig. 3)) each pattern vector to one of said plurality of clusters represented by a nearest prototype as judged for said each pattern vector;
   (c) judging (306(Fig. 4)), for each of at least plural ones within said plurality of pattern vectors, whether there is at least one prototype which is unlikely to be nearest to said each pattern vector, within said plurality of prototypes; and

(d) limiting (307(Fig. 4)) said plurality of prototypes used in said step a, depending upon a pattern vector to be processed in step a, so that said plurality of prototypes other than at least one prototype is used in step a for one of said plurality of pattern vectors, in case said at least one prototype has been judged as a prototype unlikely to be nearest to said one pattern vector.

**2.** A data clustering apparatus for clustering a plurality of data items included in a date set into a plurality of clusters, comprising:

(a) first means for judging, for each of a plurality of pattern vectors, one of a plurality (k) of prototypes nearest to said each pattern vector, each pattern vector representing one of a plurality of data items included in a date set and having a plurality of dimensions, said plurality of prototypes respectively representing a plurality (k) of clusters and being located in a space which has said plurality of dimensions;

(b) second means for assigning each pattern vector to one of said plurality of clusters represented by a nearest prototype as judged for said each pattern vector;

(c) third means for judging, for each of at least plural ones within said plurality of pattern vectors, whether there is at least one prototype which is unlikely to be nearest to said each pattern vector, within said plurality of prototypes; and

(d) fourth means for limiting said plurality of prototypes used by said first means, depending upon a pattern vector to be processed by said first means, so that said plurality of prototypes other than at least one prototype is used by said first means for one of said plurality of pattern vectors, in case said at least one prototype has been judged as a prototype unlikely to be nearest to said one pattern vector.

**3.** The invention of claim 1 or 2, wherein

said space is divided into a plurality of subspaces said before judging (a);

said judging (c) includes judging (306(Fig. 4)), with each of at least plural ones within said plurality of subspaces, whether there is at least one prototype which is unlikely to be nearest to any of plural pattern vectors located in said each subspace;

wherein said limiting (d) includes limiting (307(Fig. 4)) said plurality of prototypes used in said step a, depending upon a subspace to be processed in said judging (a), so that said plurality of prototypes other than at least one prototype is used in step a for any of plural pattern vectors located in said subspace, in case said at least one prototype has been judged as a prototype unlikely to be nearest to any of said plural pattern vectors located in said subspace.

**4.** The invention of claim 3, wherein

said judging (c) includes judging (306(Fig. 4)) whether there is at least one prototype unlikely to be nearest for said each subspace, based upon a plurality of maximum distances and a plurality of minimum distances;

each of said plurality of maximum distances corresponds to one of said plurality of prototypes and represents a maximum value of distance from said corresponding prototype to said each subspace;

each of said plurality of minimum distances corresponds to one of said plurality of prototypes and represents a minimum value of distance from corresponding prototype to said each subspace.

**5.** The invention of claim 4,
wherein said judging (c) includes:

calculating (302(Fig. 3)) said plurality of maximum distances and said plurality of minimum distances;

judging (303(Fig. 3)) a minimum value of said plurality of maximum distances;

judging (306(Fig. 3)) whether at least one of said plurality of minimum distances is larger than said minimum value; and

judging (306(Fig. 3)) at least one prototype with said at least one minimum distance larger than the minimum value, as a prototype unlikely to be nearest for said each subspace, if there is such at least one minimum distance larger than the minimum value.

**6.** The invention of claim 3, wherein

said dividing includes determining (101(Fig. 2)) a multidimensional search tree, based upon said plurality of pattern vectors;
said space with said plurality of dimensions corresponds to a root node of said tree;
said plurality of subspaces corresponds to nodes of said tree lower than said root nodes;
said plurality of subspaces are arranged in hierarchy; and
wherein said judging (c) includes:

(c1) judging (306(Fig. 4)), with each of at least plural ones within a plurality of nodes lower than said root node, whether there is at least one prototype within said plurality of prototypes, which is unlikely to be nearest for one of said plurality of subspaces corresponding to said each node; and
(c2) limiting (307(Fig. 4)) said plurality of prototypes used in (c1) so that said plurality of prototypes other than at least one prototype is use when said step c1 is executed to a node lower than said each node, in case it is judged in said step c1 with said each node that said at least one prototype is a prototype unlikely to be nearest for said one subspace corresponding to said each node.

**7.** The invention of claim 6,
wherein said judging (c1) includes judging (306(Fig. 4)) whether there is at least one prototype unlikely to be nearest for said one subspace corresponding to said each node, based upon a plurality of maximum distances and a plurality of minimum distances;

each of said plurality of maximum distances corresponds to one of said plurality of prototypes and represents a maximum value of distance from said corresponding prototype to said subspace corresponding to said each node;
each of said plurality of minimum distances corresponds to one of said plurality of prototypes and represents a minimum value of distance from said corresponding prototype to said one subspace corresponding to said each node.

**8.** The invention of claim 7,
wherein said judging (c1) includes:

calculating (302(Fig. 3)) said plurality of maximum distances and said plurality of minimum distances;
judging (303(Fig. 3)) a minimum value of said plurality of maximum distances;
judging (306(Fig. 3)) whether at least one of said plurality of minimum distances is larger than said minimum value; and
judging (306(Fig. 3)) at least one prototype with said at least one minimum distance larger than the minimum value, as a prototype unlikely to be nearest for said subspace corresponding to said each node, if there is such at least one minimum distance larger than the minimum value.

**9.** The invention of claim 6, wherein

said tree is binary search tree; and
each of nodes of said tree lower than said root node is determined so that a subspace corresponding to said each node is obtained, by dividing a subspace corresponding to a node upper to said each node by one node, into two subspaces by a plane perpendicular to a coordinate axis of one of said plurality of dimensions.

**10.** The invention of any preceding claim, wherein:

a plurality (k) of new prototypes respectively representing said plurality of clusters is determined based upon pattern vectors assigned to respective clusters by said assigning (b);
said judging (a) and assigning (b) and said determining of said plurality of new prototypes are repeated, so that said steps a and b are executed with said plurality of new prototypes, until a predetermined termination condition is met;
wherein said judging (c) and limiting (d) are further executed with said plurality of new prototypes, before each repetition of said judging (a).

**11.** The invention of claim 10, wherein each of said plurality of new prototypes is a point represented by an average of a plurality of pattern vectors assigned by said assigning (b) to one of said plurality of clusters represented by said each new prototype.

FIG. 1

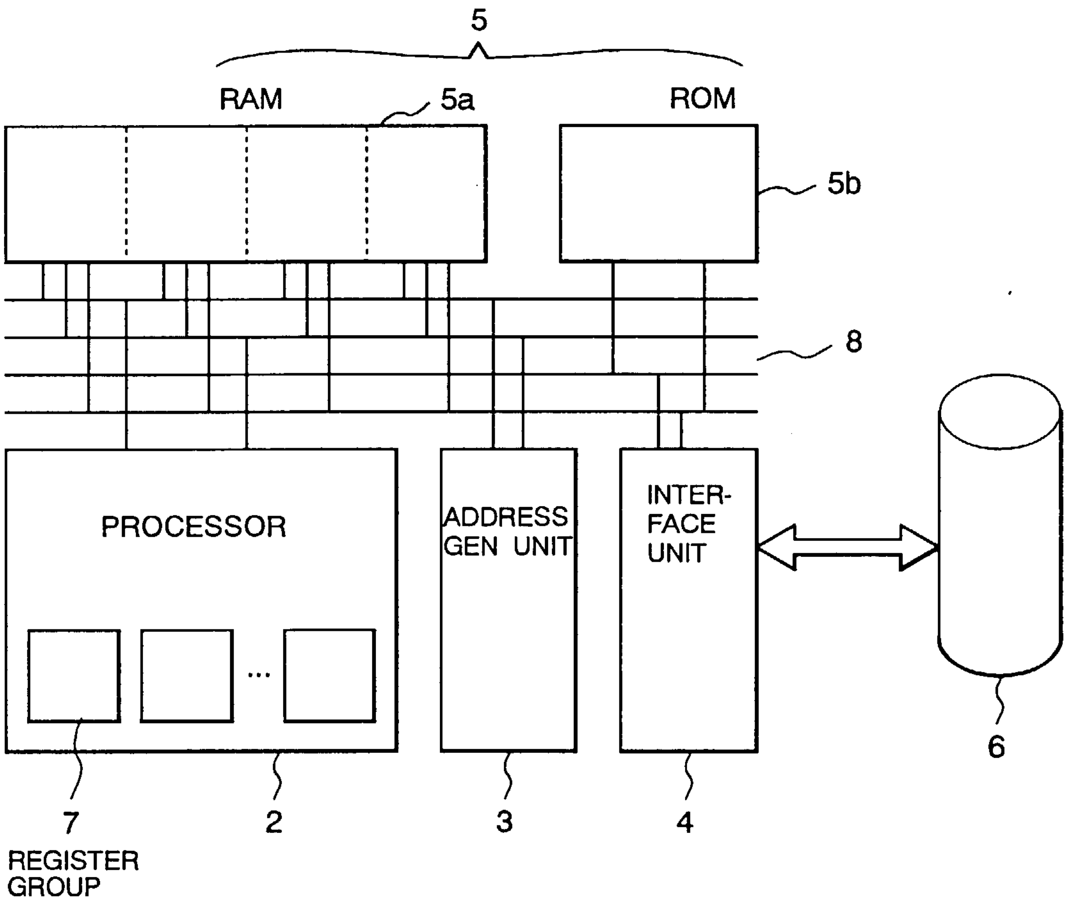
5
RAM
5a
ROM
5b
8
PROCESSOR
ADDRESS GEN UNIT
INTER-FACE UNIT
6
7
REGISTER GROUP
2
3
4

FIG. 2

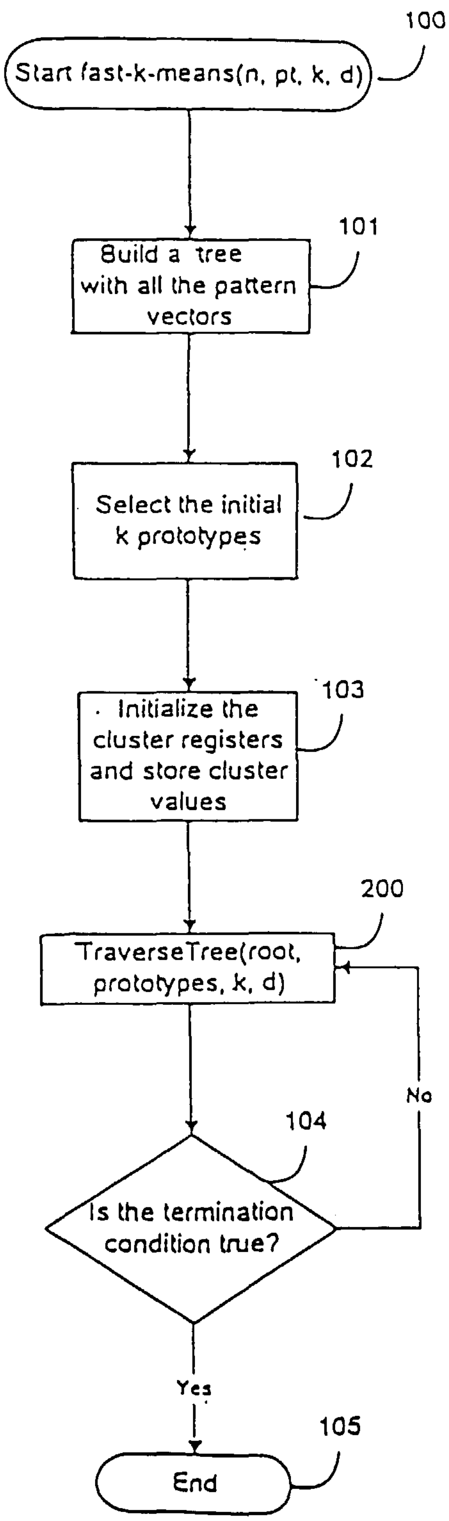
100
Start fast-k-means(n, pt, k, d)
101
Build a tree with all the pattern vectors
102
Select the initial k prototypes
103
Initialize the cluster registers and store cluster values
200
TraverseTree(root, prototypes, k, d)
No
104
Is the termination condition true?
Yes
105
End

FIG. 3

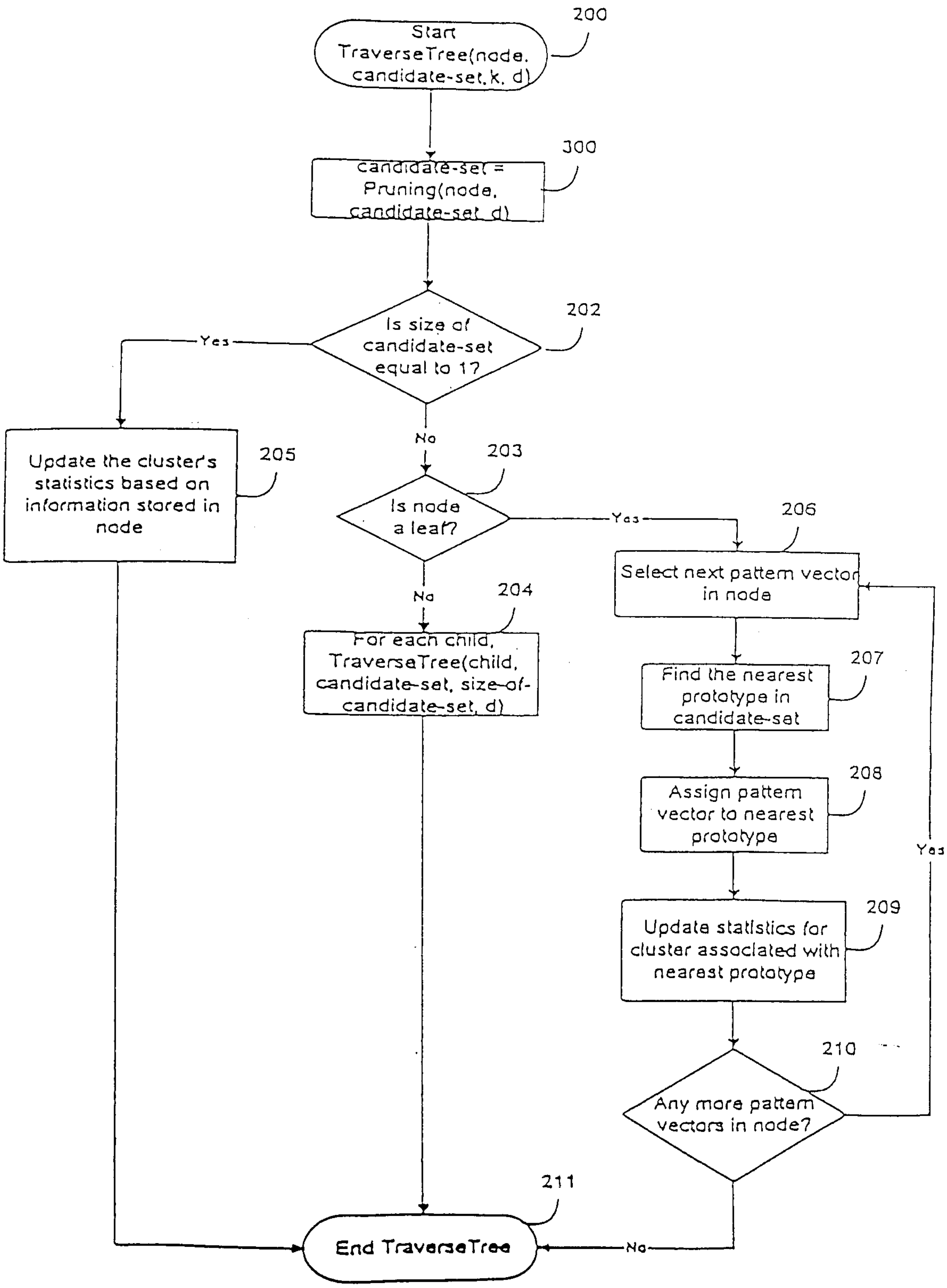
200
Start TraverseTree(node, candidate-set, k, d)
300
candidate-set = Pruning(node, candidate-set, d)
202
Is size of candidate-set equal to 1?
Yes
No
205
Update the cluster's statistics based on information stored in node
203
Is node a leaf?
Yes
No
204
For each child, TraverseTree(child, candidate-set, size-of-candidate-set, d)
206
Select next pattern vector in node
207
Find the nearest prototype in candidate-set
208
Assign pattern vector to nearest prototype
209
Update statistics for cluster associated with nearest prototype
210
Any more pattern vectors in node?
Yes
No
211
End TraverseTree

FIG. 4

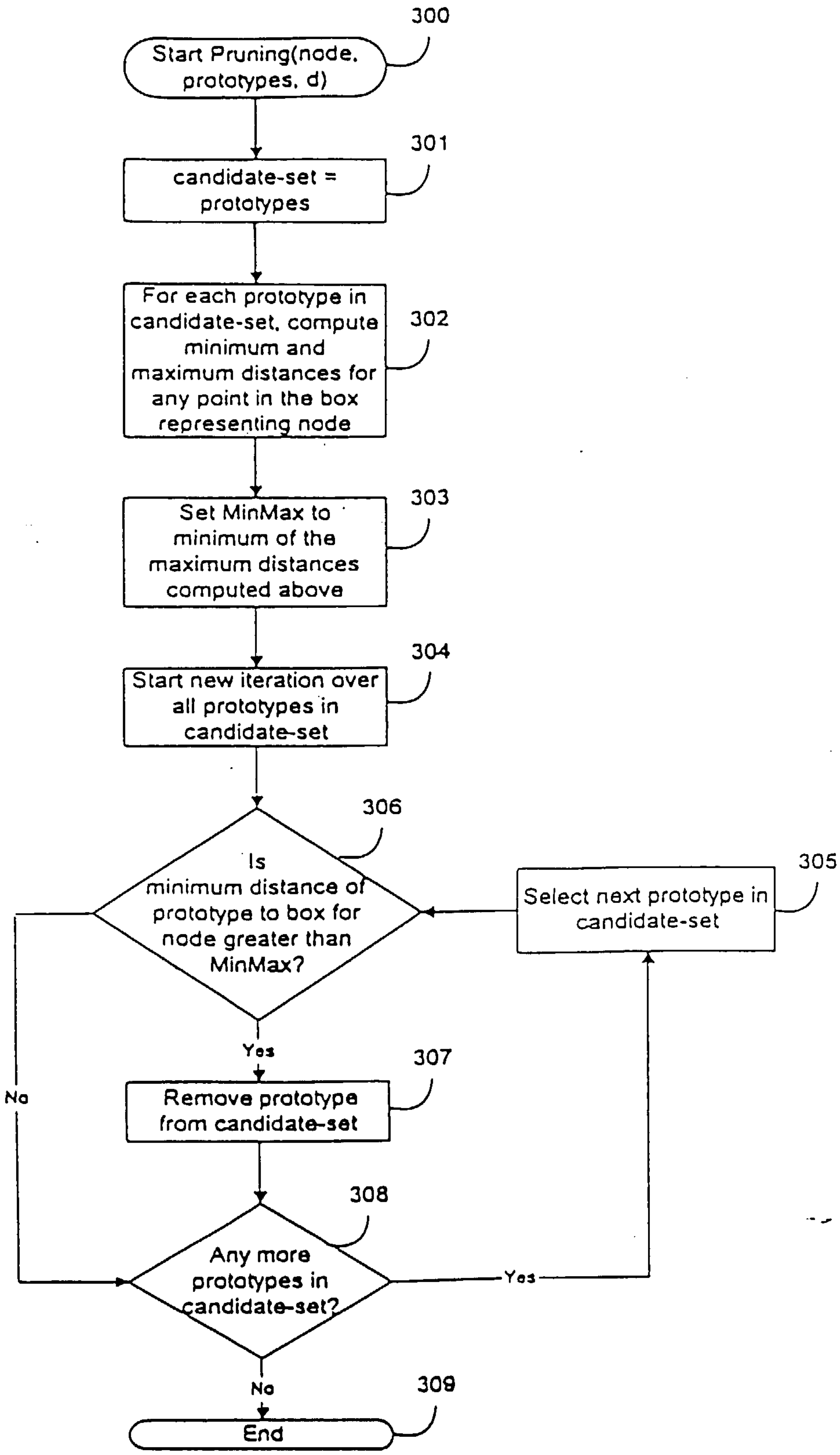
300
Start Pruning(node, prototypes, d)
301
candidate-set = prototypes
302
For each prototype in candidate-set, compute minimum and maximum distances for any point in the box representing node
303
Set MinMax to minimum of the maximum distances computed above
304
Start new iteration over all prototypes in candidate-set
306
Is minimum distance of prototype to box for node greater than MinMax?
305
Select next prototype in candidate-set
Yes
No
307
Remove prototype from candidate-set
308
Any more prototypes in candidate-set?
Yes
No
309
End

FIG. 5